# EUROPÄISCHE PATENTANMELDUNG

(11) **EP 4 494 976 A1**
(43) Veröffentlichungstag der Anmeldung: **22.01.2025**
(21) Anmeldenummer: 24182258.4
(22) Anmeldetag: 14.06.2024
(51) Int. Cl.: B62D 13/06, B62D 15/02

(54) **VERFAHREN UND FAHRERASSISTENZSYSTEM ZUM ASSISTIERTEN RÜCKWÄRTSFAHREN MIT EINEM FAHRZEUGGESPANN SOWIE KRAFTFAHRZEUG**

(30) Priorität: 18.07.2023 DE 102023206807
(71) Anmelder: VOLKSWAGEN AG, 38440 Wolfsburg (DE)
(72) Erfinder: Hüger, Philipp, 38471 Rühen (DE); Batek, Petr, 326 00 Plzen (CZ); Bradar, Viktor, 33209 tenovice (CZ); Jank, Dennis, 30173 Hannover (DE); Imroth, Dennis, 38162 Schandelah (DE); Jindrich, Havlík, 30100 Plzen (CZ); Marek, Fehér, 33012 Horní Bríza (CZ)

(57) **Zusammenfassung**

Die Erfindung betrifft ein Verfahren und ein Fahrerassistenzsystem zum assistierten Rückwärtsfahren mit einem Fahrzeuggespann (1), wobei zunächst bei einer Vorwärtsfahrt deren Vorwärtsfahrttrajektorie (4) gespeichert wird und mittels einer Sensorik des Zugfahrzeugs (2) Objekte (5) detektiert werden, die seitlich neben der Vorwärtsfahrttrajektorie (4) angeordnet sind. Es wird eine Rückwärtsfahrttrajektorie (7), die möglichst wenig von der gefahrenen Vorwärtsfahrttrajektorie (4) abweicht geplant. Zudem wird das jeweilige detektierte Objekt (5) als Kollisionsobjekt (6) klassifiziert, wenn es in der geplanten Rückwärtsfahrttrajektorie (7) liegt. In so einem Fall wird eine neue Rückwärtsfahrttrajektorie (7a) erzeugt, der frei von Kollisionsobjekte (6) ist. Das Gespann (1) wird dann mithilfe des Fahrerassistenzsystems entlang der neuen Rückwärtsfahrttrajektorie (7a) rückwärts gefahren. Dabei wird eine aktuelle Abweichung einer tatsächlichen Rückwärtsfahrttrajektorie des Anhängerfahrzeugs (3) von der neuen Rückwärtsfahrttrajektorie (7a) ermittelt, und wenn die aktuelle Abweichung größer als eine zulässige Grenzabweichung ist, wird mittels des Fahrerassistenzsystems das Gespann (1) zum Ausführen einer Korrekturaktion vollständig gestoppt. Das assistierte Rückwärtsfahren wird nach Ausführung der Korrekturaktion wiederaufgenommen.

## Beschreibung

Die vorliegende Erfindung betrifft ein Verfahren zum assistierten Rückwärtsfahren mit einem Gespann, das ein Zugfahrzeug und ein an das Zugfahrzeug angekuppeltes Anhängerfahrzeug sowie ein Fahrerassistenzsystem aufweist.

Rückwärtsfahren mit einem Fahrzeuggespann, an dessen Zugfahrzeug ein Anhänger angekoppelt ist, stellt sich für ungeübte Fahrer oftmals als schwierig dar. Daher werden in modernen Kraftfahrzeugen heutzutage immer öfter Assistenzsysteme angeboten, die den Fahrer beim Rückwärtsfahren mit einem Anhängerfahrzeug unterstützen. Beim Vorwärtsfahren ist die lenkende Achse in Fahrtrichtung gesehen die vorderste der Achsen des Gespanns, und das Anhängerfahrzeug wird gezogen. Dahingegen ist die lenkende Achse des Gespanns beim Rückwärtsfahren in Fahrtrichtung gesehen die letzte Achse des Gespanns, und das Anhängerfahrzeug wird geschoben. Das Anhängerfahrzeug weist zumeist eine Starrachse auf, die beim Rückwärtsfahren mit dem Gespann dessen erste Achse bildet. Somit muss das schiebende Zugfahrzeug beim Rückwärtsfahren mit dem Gespann einen weiter ausholenden Fahrkorridor befahren, um das angekuppelte Anhängerfahrzeug zweckmäßig zu lenken, denn es ist aufgrund seiner Starrachse weniger lenkwillig. Daher ergeben sich für das Zugfahrzeug und für das das Anhängerfahrzeug jeweils Fahrtrajektorien für das Vorwärtsfahren, die sich von den Fahrtrajektorien für das Rückwärtsfahren unterscheiden. Oftmals ist es erforderlich, mit dem Gespann eine soeben vorwärts gefahrene Strecke möglichst genau rückwärts zu befahren, etwa um an einer Engstelle Gegenverkehr passieren zu lassen, oder aus einer engen Sackeinfahrt rückwärts hinauszustoßen. Doch aufgrund der unterschiedlichen Fahrtrajektorien kann es dazu kommen, dass beim Vorwärtsfahren entlang der Vorwärtsfahrttrajektorie an Objekten vorbeigefahren wird, die bei einem Rückwärtsfahren als Hindernisse in der Rückwärtsfahrttrajektorie liegen.

Die US 2022 / 0 230 544 A1 schlägt ein System vor, mittels dessen verhindert wird, dass ein von einem Fahrzeug gezogener Anhänger bei weiterem unverändertem Vorwärtsfahren mit einem seitlich neben dem Anhänger angeordneten Kollisionsobjekt kollidiert. Eine Sensoreinrichtung erfasst besagtes Objekt, und eine Steuereinrichtung stellt dem Fahrer eine Warnmeldung bereit, die ihn anleitet, wie er das Fahrzeug zu lenken bzw. zu steuern hat, um die drohende Kollision zu vermeiden. Kann das Kollisionsobjekt unter weiterer Vorwärtsfahrt nicht umfahren werden, leitet die Steuereinrichtung den Fahrer an, rückwärtszufahren.

Die US 2014 / 0 222 228 A1 offenbart ein Anhänger-Rückfahr-Assistenzsystem, wobei ein Weg eines Fahrzeug-Anhänger-Gespanns geändert wird, falls das Fahrzeug-Anhänger-Gespann im Begriff ist mit einem Kollisionsobjekt zusammenzustoßen. Um besagtes Kollisionsobjekt zu erfassen, wird eine Erfassungseinheit eingesetzt, die einen Sensor am Anhänger erfordert.

Ferner offenbart die US 2019 / 0 086 204 A1 ein Verfahren zum Ermitteln einer Länge eines an ein Zugfahrzeug angehängten Anhängers. Hierzu ist es erforderlich, das mit dem den Anhänger aufweisenden Gespann wenigstens einmal rückwärts gefahren wird. Identifiziert ein Objekterkennungssystem dabei ein Objekt entlang eines geplanten Weges, berechnet ein Wegplanungssystem den geplanten Weg neu, um besagtem Objekt auszuweichen. Ferner kann eine Kollisionswahrscheinlichkeit ermittelt werden, und wenn die Kollisionswahrscheinlichkeit einen vorgegebenen Schwellenwert überschreitet, passt das Wegplanungssystem den Weg an und sendet sie an ein Fahrerassistenzsystem.

Jedoch erlauben herkömmliche Fahrerassistenzsysteme, die zum Steuern einer Lenkung eines Kraftfahrzeugs ausgelegt sind, es aufgrund steuerungstechnischer Vorgaben nicht, einen maximal möglichen Lenkeinschlag mit der Lenkung des Kraftfahrzeugs auszuführen, zumindest nicht, wenn mittels des Fahrerassistenzsystem das Kraftfahrzeug rückwärtsbewegt werden soll. Hat also der Fahrer beim Vorwärtsfahren der Strecke, die mitsamt Anhängerfahrzeug möglichst genau wieder rückwärts gefahren werden soll, den maximal möglichen Lenkeinschlag ausgenutzt, sind die herkömmlichen Fahrerassistenzsysteme nicht dazu in der Lage, die Strecke eigenständig einzügig rückwärts zurückzufahren. Gegebenenfalls wird eine mittels des herkömmlichen Fahrerassistenzsystems assistierte Rückwärtsfahrt dann abgebrochen und der Fahrer ist wieder auf sich allein gestellt. Es besteht daher der Bedarf nach einem System, das dieses Problem behebt.

Aufgabe der vorliegenden Erfindung ist es, eine Lösung zu schaffen, um das assistierte Rückwärtsfahren mit einem Fahrzeuggespann für einen menschlichen Fahrer des Gespanns besonders zuverlässig, sicher und möglichst einfach sowie aufwandsarm zu gestalten.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind kategorie- und ausführungsformübergreifend zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Gemäß der Erfindung wird ein Verfahren zum assistierten Rückwärtsfahren mit einem Fahrzeuggespann vorgeschlagen. Das Fahrzeuggespann wird hierin einfach als Gespann bezeichnet und umfasst ein Zugfahrzeug und ein an das Zugfahrzeug mittels einer Anhängerkupplung angekuppeltes Anhängerfahrzeug. Eines der Fahrzeuge ist mit einem Fahrerassistenzsystem ausgestattet, das zum Ausführen des Verfahrens konfiguriert ist und ebenfalls zur Erfindung gehört. Insbesondere weist das Zugfahrzeug also das Fahrerassistenzsystem auf. Es ist denkbar, dass das Gespann das Fahrerassistenzsystem derart aufweist, dass eines oder einige von Fahrerassistenzsystemmodulen des Fahrerassistenzsystems an Bord des Zugfahrzeugs angeordnet ist/sind und eines oder einige der Fahrerassistenzsystemmodule desselben Fahrerassistenzsystems an Bord des Anhängerfahrzeugs. Alternativ oder zusätzlich ist es denkbar, dass eines oder einige der Fahrerassistenzsystemmodule desselben Fahrerassistenzsystems extern des Gespanns ausgebildet ist/sind, beispielsweise in Form oder als Teil einer mit den anderen Fahrerassistenzsystemmodulen zur Datenübertragung gekoppelten. Des Weiteren wird erfindungsgemäß ein Kraftfahrzeug, insbesondere ein Personenkraftwagen, vorgeschlagen, der das Fahrerassistenzsystem aufweist und dazu eingerichtet ist, als Zugfahrzeug für das Gespann zu fungieren.

Bei dem Verfahren handelt es sich insbesondere um ein computerimplementierbares Verfahren, was bedeutet, dass zumindest einige der im Folgenden näher erläuterten Schritte des Verfahrens mittels eines zur elektronischen Datenverarbeitung eingerichteten Computers ausführbar sind. In dem Fall schlägt die Erfindung zudem sowohl ein Computerprogramm als auch ein computerlesbares Speichermedium vor, auf dem das Computerprogramm gespeichert ist. Das Computerprogramm veranlasst bei einer Ausführung seiner Programmbefehle durch einen Computer diesen dazu, das Verfahren zum assistierten Rückwärtsfahren mit dem Fahrzeuggespann auszuführen. Bei dem Computer handelt es sich insbesondere um das Fahrerassistenzsystem oder um eines oder eine Gruppe der Fahrerassistenzsystemmodule, optional in Kombination mit der gespannexternen Computereinrichtung. Zudem schlägt die Erfindung dann ein Computerprogramm vor, das bei einer Ausführung seiner Programmbefehle durch den Computer bzw. das Fahrerassistenzsystem diesen bzw. dieses veranlasst, das Verfahren zum assistierten Rückwärtsfahren mit dem Fahrzeuggespann auszuführen. Bei den im Folgenden erläuterten Fahrerassistenzsystemmodulen kann es sich also um Softwaremodule bzw. Programmmodule des Computerprogramms handeln.

Bei dem Verfahren zum assistierten Rückwärtsfahren mit dem Gespann wird zunächst in einem Schritt S1 des Verfahrens mit dem Gespann assistiert oder unassistiert - also manuell, rein durch den menschlichen Fahrer, oder ganz oder teilweise durch ein Fahrerassistenzsystem assistiertvorwärts gefahren. Dabei wird eine entsprechende Vorwärtsfahrttrajektorie des Gespanns im Fahrerassistenzsystems gespeichert, beispielsweise in einem Trajektorienspeicher des Fahrerassistenzsystems, der in möglicher Ausgestaltung als Ringspeicher ausgeführt ist. Die Vorwärtsfahrttrajektorie des Gespanns weist eine Vorwärtsfahrttrajektorie des Zugfahrzeugs und eine Vorwärtsfahrttrajektorie des Anhängerfahrzeugs auf; da diese aber bei Vorwärtsfahrt des Gespanns - anders als bei Rückwärtsfahrt des Gespanns - kaum voneinander abweichen, werden sie in guter Näherung als deckungsgleich angenommen. Mittels einer Sensorik des Zugfahrzeugs werden während der Vorwärtsfahrt Objekte detektiert, die seitlich neben der Vorwärtsfahrttrajektorie angeordnet sind. Die Sensorik weist beispielsweise Ultraschall-, Laser-, Radar-, Lidar-, Infrarot- und/oder Kamerasensoren auf. Sensordaten, die mittels der Sensorik erhoben werden/wurden und die Objekte neben der Vorwärtsfahrttrajektorie charakterisieren, werden dem Fahrerassistenzsystem bereitgestellt, insbesondere als Punktwolke. So werden Positionen der Objekte gespeichert, zum Beispiel in einen Objektspeicher des Fahrerassistenzsystems.

Während oder nach Beendigung der Vorwärtsfahrt werden in einem Schritt S2, zum Beispiel mittels eines Rückwärtsfahrttrajektorienerzeugungsmoduls des Fahrerassistenzsystems, eine Rückwärtsfahrttrajektorie für das Gespann und damit korrespondierende fahrzeugindividuelle Rückwärtsfahrtkorridore geplant. Die Rückwärtsfahrttrajektorie des Gespanns bzw. für das Gespann wird dabei so geplant, dass sie möglichst wenig von der gefahrenen Vorwärtsfahrttrajektorie abweicht. Die Vorwärtsfahrttrajektorie fungiert somit als eine Referenztrajektorie für die anstehende Rückwärtsfahrt. Die mit der Rückwärtsfahrttrajektorie des Gespanns korrespondierenden fahrzeugindividuellen Rückwärtsfahrtkorridore werden je Fahrzeug des Gespanns separat geplant. Es wird also ein Rückwärtsfahrtkorridor für das Zugfahrzeug geplant, und für das Anhängerfahrzeug wird ein eigener Rückwärtsfahrtkorridor geplant.

In einem Schritt S3 des Verfahrens erfolgt ein Klassifizieren der detektierten Objekte, etwa mittels eines Objektklassifizierungsmoduls des Fahrerassistenzsystems. Dabei wird das jeweilige detektierte Objekt als Kollisionsobjekt klassifiziert, wenn das entsprechende Objekt in einem oder in beiden der geplanten Rückwärtsfahrtkorridore liegt. Es ist möglich, dass das jeweilige detektierte Objekt dahingegen als Nichtkollisionsobjekt klassifiziert wird, wenn es beim Rückwärtsfahren mit dem Gespann in keinem der Rückwärtsfahrtkorridore liegt.

Ein Schritt S4 des Verfahrens sieht vor, dass, wenn eines oder mehr der detektierten Objekte als Kollisionsobjekt klassifiziert wurde, mittels des Rückwärtsfahrttrajektorienerzeugungsmoduls eine neue Rückwärtsfahrttrajektorie für das Gespann und infolgedessen je Fahrzeug ein jeweiliger neuer fahrzeugindividueller Rückwärtsfahrtkorridor erzeugt werden. Der jeweilige neue fahrzeugindividuelle Rückwärtsfahrtkorridor wird dabei so erzeugt, dass er vom jeweiligen in Schritt S2 geplanten Rückwärtsfahrtkorridor möglichst wenig abweicht. Die beiden neuen Rückwärtsfahrtkorridore werden aber jedenfalls so erzeugt, dass die als Kollisionsobjekte klassifizierten der detektierten Objekte nun in keinem der neuen fahrzeugindividuellen Rückwärtsfahrtkorridore liegen.

In einem Schritt S5 des Verfahrens wird das Gespann in einem Rückwärtsfahrtassistenzbetriebsmodus, der zum Beispiel mittels eines Fahrzeugsteuerungsmoduls des Fahrerassistenzsystems ausgeführt wird, rückwärts gefahren, wobei das Fahrerassistenzsystem, insbesondere dessen Fahrzeugsteuerungsmodul, in eine Querführung des Zugfahrzeugs zumindest derart eingreift, dass das Gespann entlang der neuen Rückwärtsfahrttrajektorie und infolgedessen durch die neuen fahrzeugindividuellen Rückwärtsfahrtkorridore hindurchgefahren wird. Das Fahrerassistenzsystem kann zum Beispiel in den Rückwärtsfahrtassistenzbetriebsmodus geschaltet werden, indem ein Fahrer des Zugfahrzeugs eine entsprechende Eingabe am Fahrerassistenzsystem vornimmt, etwa ein Sprachkommando gibt oder eine Schaltfläche betätigt etc. Durch das Aktivieren des Rückwärtsfahrtassistenzbetriebsmodus wird insbesondere das Fahrzeugsteuerungsmodul des Fahrerassistenzsystems in einen Aktiv- bzw. Assistierungsbetrieb geschaltet.

In einem Schritt S6 des Verfahrens wird mittels des Fahrerassistenzsystems, zum Beispiel mittels eines Abweichungserfassungsmoduls des Fahrerassistenzsystems, beim assistierten Rückwärtsfahren eine aktuelle Abweichung einer tatsächlichen Rückwärtsfahrttrajektorie des Anhängerfahrzeugs von der neuen Rückwärtsfahrttrajektorie ermittelt. Wenn die aktuelle Abweichung größer als eine zulässige Grenzabweichung ist, wird mittels des Fahrerassistenzsystems das Gespann zum Ausführen einer Korrekturaktion vollständig gestoppt. Mit anderen Worten wird die assistierte Rückwärtsfahrt deaktiviert, zumindest, um die Korrekturaktion ausführen zu können. Die Korrekturaktion kann ganz oder teilweise vom Fahrerassistenzsystem ausgeführt werden. Es ist aber genauso gut denkbar, dass die Korrekturaktion ein Eingreifen oder Mitwirken des Fahrers des Gespanns erfordert. Nachdem die Korrekturaktion ausgeführt wurde, wird die assistierte Rückwärtsfahrt wiederaufgenommen bzw. reaktiviert.

Bei dem Verfahren bzw. mittels des Fahrerassistenzsystems wird bei Vorwärtsfahrt des Gespanns dessen abgefahrene Vorwärtsfahrttrajektorie aufgezeichnet. Die gefahrene Trajektorie kann beispielsweise kontinuierlich im Ringspeicher des Fahrerassistenzsystems aufgezeichnet werden. Zum Beispiel wird die Trajektorie stets für eine vorgegebene absolvierte Fahrstreckenlänge, beispielsweise für die letzten 100 m etc., gespeichert. Der Fahrer kann dabei praktisch beliebig fahren. Dabei ist der Aspekt besonders hervorzuheben, dass der Fahrer den ganzen maximal möglichen Lenkeinschlag des Zugfahrzeugs ausnutzen kann. Denn aufgrund der Korrekturaktion kann ein steuerungstechnisch beschränkter Lenkwinkel des Zugfahrzeugs kompensiert werden. Somit löst das Verfahren das Problem für das assistierte Rückwärtsfahren, dass herkömmliche Fahrerassistenzsysteme dabei einen maximal möglichen Lenkeinschlag des Zugfahrzeugs nicht reproduzieren.

Dank des Verfahrens ist zudem das Problem des Standes der Technik behoben, dass ein Objekt, am dem in Vorwärtsfahrt kollisionsfrei vorbeigefahren wurde, bei Rückwärtsfahrt entlang der Vorwärtsfahrttrajektorie zu einer Kollision führen mit dem Gespann kann. Des Weiteren schließt das Verfahren alle möglichen Anhängerfahrzeuge ein, da diese keine spezielle Ausrüstung/Ausstattung aufweisen brauchen. Denn während der assistierten Rückwärtsfahrt ist das Fahrerassistenzsystem nicht (mehr) auf Sensoren des Gespanns angewiesen, da eine Sensorerfassung der abzufahrenden Rückwärtsfahrttrajektorie bereits beim vorgelagerten Vorwärtsfahren erfolgt ist. Oftmals werden rückwärtige Sensoren des Zugfahrzeugs bei Betrieb mit einem Anhängerfahrzeug ohnehin deaktiviert, um dem Fahrer keine Fehlinformationen zu liefern. Sollte es dazu kommen, dass die Rückwärtsfahrt gar nicht oder nicht weiter ausgeführt werden kann, ist bei dem Verfahren insbesondere vorgesehen, dass die Assistierung eingestellt und die Steuerung des Gespanns (wieder) vollständig an den menschlichen Fahrer übergeben oder von vornherein - gegebenenfalls unter Ausgeben einer Hinweismeldung an den Fahrer - der Rückwärtsfahrtassistenzbetriebsmodus nicht aktiviert wird. Es ist insbesondere denkbar, dass das Verfahren eine statische Karte nutzt, anhand derer das Fahrerassistenzsystem in die Querführung des Zugfahrzeugs eingreift. Ferner ist es denkbar, dass der Fahrer mittels des Fahrerassistenzsystems gewarnt wird, wenn es feststellt, dass die geplante Rückwärtsfahrt nicht durchgeführt werden kann. Es versteht sich, dass zum Ausführen des Verfahrens dem Fahrerassistenzsystem geometrische Eigenschaften des Zug- und des Anhängerfahrzeugs im Voraus bereitgestellt werden müssen. Zum Beispiel kann der Nutzer über ein Mensch-Maschine-Interface Abmessungen des Anhängerfahrzeugs in das Fahrerassistenzsystem einspeichern. Des Weiteren kann vorgesehen sein, dass der Nutzer auch Abmessungen des Zugfahrzeugs in das Fahrerassistenzsystem eingibt, etwa wenn das Zugfahrzeug aufgrund von Zusatzausstattung oder Ladegut von seinen Standardabmessungen abweicht.

Gemäß einer weiteren möglichen Ausführungsform ist vorgesehen, dass das Fahrerassistenzsystem in Schritt S5 die Querführung des Zugfahrzeugs und/oder eine Längsführung des Zugfahrzeugs vollständig übernimmt. Dadurch wird der menschliche Fahrer beim Rückwärtsfahren mit dem Gespann als mögliche Fehlerquelle vollständig aus der Steuerung des Gespanns ausgenommen. Dadurch ist zum Beispiel sichergestellt, dass der Fahrer die Rückwärtsfahrt zu schnell absolviert, wodurch eine Fahrstabilität beeinträchtigt werden könnte. Insoweit erfolgt das mit dem Gespann vollautonom.

Einer weiteren möglichen Ausgestaltung zufolge umfasst die Korrekturaktion die folgenden Schritte: In einem Schritt S6.1 wird mittels des Fahrerassistenzsystems, zum Beispiel mittels eines Abweichungserfassungsmoduls des Fahrerassistenzsystems, ein Abweichungspunkt ermittelt, der auf der neuen Rückwärtsfahrttrajektorie liegt und an dem die Abweichung der tatsächlichen Anhängerfahrzeug-Rückwärtsfahrttrajektorie die Grenzabweichung überschritten hat. In einem Schritt S6.2 ist dann vorgesehen, dass - mittels des Fahrers und/oder mittels des Fahrerassistenzsystems - ein Vorwärts-Korrekturzug ausgeführt wird, bei welchem mit dem Gespann vorwärts gefahren wird. Es wird also zum Ausführen des Vorwärts-Korrekturzugs eine Fahrtrichtung des Gespanns umgeschaltet. Mittels des Fahrerassistenzsystems, beispielsweise des Rückwärtsfahrttrajektorienerzeugungsmoduls, wird dann in einem Schritt S6.3 eine korrigierte Rückwärtsfahrttrajektorie erzeugt. Diese weist zwei Trajektorienabschnitte auf, nämlich einen ersten Trajektorienabschnitt und einen daran anschließenden, zweiten Trajektorienabschnitt. Der erste Trajektorienabschnitt verbindet eine Endposition des Gespanns, die es nach dem Vorwärts-Korrekturzug erreicht hat, und den Abweichungspunkt. Der zweite Trajektorienabschnitt verbindet den Abweichungspunkt und ein Ende der neuen Rückwärtsfahrttrajektorie. Insbesondere ist vorgesehen, dass der zweite Trajektorienabschnitt so geplant wird, dass er zwischen dem Abweichungspunkt und dem Ende der neuen Rückwärtsfahrttrajektorie möglichst wenig von dieser abweicht. Ferner kann vorgesehen sein, dass ein zuvor erfolgreich absolvierter Abschnitt der neuen Rückwärtsfahrttrajektorie gelöscht wird, um Speicherkapazität zu sparen. In einem Schritt S6.4 wird mithilfe des Fahrerassistenzsystems mit dem Gespann rückwärts gefahren, wobei das Fahrerassistenzsystem in eine Querführung des Zugfahrzeugs zumindest derart eingreift, dass das Gespann entlang der korrigierten Rückwärtsfahrttrajektorie fährt. Dadurch gestaltet sich das Rückwärtsfahren mit dem Gespann für den menschlichen Fahrer besonders einfach bzw. aufwandsarm.

Im Zusammenhang damit sieht eine weitere mögliche Ausführungsform vor, dass das Fahrerassistenzsystem in Schritt S6.4 die Querführung des Zugfahrzeugs und/oder eine Längsführung des Zugfahrzeugs vollständig übernimmt. Mit anderen Worten erfolgt das Rückwärtsfahren mit dem Gespann entlang der korrigierten Rückwärtsfahrttrajektorie vollautonom, was für den Fahrer noch einfacher ist und wodurch der Fahrer als Fehlerquelle aus der Steuerung des Gespanns ausgenommen wird.

Gemäß einer weiteren möglichen Ausführungsform wird mittels des Fahrerassistenzsystems eine ideale Endposition für den Vorwärts-Korrekturzug geplant. Diese zeichnet sich insbesondere dadurch aus, dass sie besonders einfach bzw. effizient mit dem Gespann erreicht werden kann und genau so weit von der neuen Rückwärtsfahrttrajektorie entfern ist, dass nach dem Vorwärts-Korrekturzug besonders einfach wieder in die neue Rückwärtsfahrttrajektorie eingeschert werden kann. Mittels des Fahrerassistenzsystems wird dann für den Vorwärts-Korrekturzug hin zur idealen Endposition eine Korrekturfahrttrajektorie geplant, zum Beispiel mittels des Rückwärtsfahrttrajektorienerzeugungsmoduls. Es wird dann - mittels des Fahrers und/oder mittels des Fahrerassistenzsystems - der Vorwärts-Korrekturzug entlang der Korrekturfahrttrajektorie ausgeführt. Davor, gleichzeitig oder danach wird mittels des Fahrerassistenzsystems zwischen der idealen Endposition und dem Abweichungspunkt der erste Trajektorienabschnitt geplant, der, wie oben beschrieben, Teil der korrigierten Rückwärtsfahrttrajektorie ist.

Einer weiteren möglichen Ausgestaltung zufolge wird zum Ausführen des Vorwärts-Korrekturzugs die vollständige Steuerung einer Längs- und einer Querführung des Zugfahrzeugs an dessen menschlichen Fahrer übergeben, woraufhin dieser den Vorwärts-Korrekturzug mit dem Gespann ausführt. Dennoch kann der Fahrer vom Fahrerassistenzsystem - auch wenn dieses nicht aktiv in eine Längs- und/oder einer Querführung des Zugfahrzeugs eingreift - unterstützt werden, etwa indem dem Fahrer der zu fahrende Vorwärts-Korrekturzug angezeigt wird, zum Beispiel in einem Display des Zugfahrzeugs. Der Fahrer hat in diesem Fall das Umfeld des Gespanns während des Vorwärts-Korrekturzugs überwachen, um sicherzustellen, dass das Gespann während des Vorwärts-Korrekturzugs nicht mit einem Gegenstand kollidiert.

In einer Alternative hierzu ist vorgesehen, dass zum Ausführen des Vorwärts-Korrekturzugs das Fahrerassistenzsystem die Querführung des Zugfahrzeugs und/oder eine Längsführung des Zugfahrzeugs vollständig übernimmt. Das bedeutet, dass das Ausführen des Vorwärts-Korrekturzugs teil- oder vollautonom durchgeführt wird, wodurch der Fahrer noch weiter entlastet wird.

Es ist insbesondere vorgesehen, dass die Schritte S1 bis S5 analog angewendet werden, um den Vorwärts-Korrekturzug auszuführen und um über den Abweichungspunkt wieder auf die neue Rückwärtsfahrttrajektorie aufzufahren.

Die aktuelle Abweichung der tatsächlichen Anhängerfahrzeug-Rückwärtsfahrttrajektorie von der neuen Rückwärtsfahrttrajektorie wird in einer weiteren möglichen Ausgestaltung ermittelt, indem während der mittels des Fahrerassistenzsystems assistierten Rückwärtsfahrt an einem auf der neuen Rückwärtsfahrttrajektorie liegenden aktuellen Positionspunkt des Gespanns ein euklidischer Abstand zwischen der tatsächlichen Anhängerfahrzeug-Rückwärtsfahrttrajektorie und dem aktuellen Positionspunkt bestimmt wird. Alternativ oder zusätzlich wird die aktuelle Abweichung ermittelt, indem während der Rückwärtsfahrt am aktuellen Positionspunkt des Gespanns ein Winkel zwischen einer im aktuellen Positionspunkt von der neuen Rückwärtsfahrttrajektorie abzweigenden Tangente und einer Tangente der tatsächlichen Anhängerfahrzeug-Rückwärtsfahrttrajektorie bestimmt wird. So lässt sich ein Abweichen des Anhängerfahrzeugs besonders einfach und zuverlässig erfassen.

Einer weiteren möglichen Ausgestaltung zufolge wird dem Fahrerassistenzsystem je Fahrzeug des Gespanns ein (erstes) imaginäres Kollisionsrechteck vorgegeben, das das entsprechende Fahrzeug vollständig einschließt und mit dem Fahrzeug mitgeführt wird. Dabei ist vorgesehen, dass ein geometrischer Flächenschwerpunkt des Kollisionsrechtecks auf einer Längsmittenachse (X-Achse) des Fahrzeugs liegt. Zudem sind eine Querachse (Y-Achse) des Fahrzeugs und eine Querachse des Kollisionsrechtecks zumindest parallel zueinander angeordnet. Das Kollisionsrechteck wird je Fahrzeug insbesondere so vorgegeben, dass eine Außenkontur des zugehörigen Fahrzeugs und die Kanten des Kollisionsrechtecks über einen ersten Sicherheitsabstand voneinander beabstandet sind, der weniger als 75 cm, bevorzugt weniger als 50 cm, insbesondere 25 cm, beträgt. Zudem wird dem Fahrerassistenzsystem je Fahrzeug des Gespanns ein imaginärer Umkreis vorgegeben, auf dem stets die Eckpunkte des zugehörigen Kollisionsrechtecks liegen. Der Umkreis wird also wie das Kollisionsrechteck mit dem entsprechenden Fahrzeug mitgeführt, wenn es bewegt wird. Es ist in dieser Ausgestaltung des Weiteren vorgesehen, dass die detektierten Objekte, beispielsweise mittels des Objektklassifizierungsmoduls des Fahrerassistenzsystems, jeweils als kritisches Objekt klassifiziert werden, wenn bei der Vorwärtsfahrt das entsprechende Objekt von einem oder beiden der Umkreise geschnitten wurde. Es ist möglich, dass das jeweilige detektierte Objekt dahingegen als unkritisches Objekt klassifiziert wird, wenn beim Vorbeifahren das entsprechende Objekt von keinem der Umkreise der Fahrzeuge geschnitten wurde. Es werden dann in Schritt S3 des Verfahrens nur diejenigen der detektierten Objekte als jeweiliges Kollisionsobjekt klassifiziert, die beim mittels des Fahrerassistenzsystems assistierten Rückwärtsfahren vom Kollisionsrechteck geschnitten werden würden. Auf diese Weise kann Rechenleistung eingespart werden, da die Anzahl der zu klassifizierenden Objekte geringer ist, als wenn alle mittels der Sensorik erfassten Objekte klassifiziert werden würden, wobei dann Objekte darunter sind, die für das Planen einer kollisionsfreien Rückwärtsfahrt irrerelevant sind.

Im Zusammenhang mit dem Kollisionsrechteck ist in Weiterbildung vorgesehen, dass je Fahrzeug ein zweites imaginäres Kollisionsrechteck, das vollständig innerhalb des ersten Kollisionsrechtecks liegt, und ein drittes imaginäres Kollisionsrechteck, das vollständig innerhalb des zweiten Kollisionsrechtecks liegt, vorgegeben werden. Insbesondere sind die Kollisionsrechtecke konzentrisch zueinander, teilen sich also einen gemeinsamen Flächenschwerpunkt, der auf der Längsmittenachse des Fahrzeugs liegt. In möglicher Weiterbildung sind die Kanten des ersten Kollisionsrechtecks und die Außenkontur des zugehörigen Fahrzeugs über den ersten Sicherheitsabstand voneinander beabstandet, der beispielsweise 75 cm beträgt. Die Kanten des zweiten Kollisionsrechtecks und die Kanten des ersten Kollisionsrechtecks sind zum Beispiel 25 cm voneinander beabstandet, wodurch die Kanten des zweiten Kollisionsrechtecks und die Außenkontur des zugehörigen Fahrzeugs über einen zweiten Sicherheitsabstand von 50 cm voneinander beabstandet sind. Des Weiteren sind die Kanten des dritten Kollisionsrechtecks und die Kanten des zweiten Kollisionsrechtecks zum Beispiel 25 cm voneinander beabstandet, wodurch die Kanten des dritten Kollisionsrechtecks und die Außenkontur des zugehörigen Fahrzeugs über einen dritten Sicherheitsabstand von 25 cm voneinander beabstandet sind. Dies ist nur als ein mögliches Beispiel zu verstehen: andere Abstände zwischen den Kanten der Kollisionsrechtecke bzw. zwischen den Kollisionsrechtecken und der Außenkontur des zugehörigen Fahrzeugs sind natürlich möglich. Beim mittels des Fahrerassistenzsystems assistierten Rückwärtsfahren wird in diesem Fall das jeweilige Kollisionsobjekt, etwa mittels des Objektklassifizierungsmoduls, solange als ein Hinweisobjekt klassifiziert, solange das entsprechende Kollisionsobjekt vom ersten Kollisionsrechteck, aber weder vom zweiten Kollisionsrechteck noch vom dritten Kollisionsrechteck geschnitten wird. In Reaktion auf das Hinweisobjekt wird mittels des Fahrerassistenzsystems eine Hinweisaktion ausgeführt. Zum Beispiel wird dem Fahrer mitgeteilt, dass das Gespann sich dem Kollisionsobjekt nähert und/oder eine Fahrgeschwindigkeit des Gespanns wird reduziert und/oder dem Fahrer wird die vollständige oder teilweise Wiederübernahme der Steuerung des Gespanns angeboten. Weiter wird beim assistierten Rückwärtsfahren das jeweilige Kollisionsobjekt solange als ein Warnobjekt klassifiziert, solange das entsprechende Kollisionsobjekt vom ersten Kollisionsrechteck und vom zweiten Kollisionsrechteck, aber nicht vom dritten Kollisionsrechteck geschnitten wird, wobei in Reaktion auf das Warnobjekt mittels des Fahrerassistenzsystems eine Warnaktion ausgeführt wird. Zum Beispiel wird dem Fahrer mitgeteilt, dass dem Gespann eine Kollision droht und/oder eine Fahrgeschwindigkeit des Gespanns wird auf weiter/stärker reduziert und/oder dem Fahrer wird die vollständige Wiederübernahme der Steuerung des Gespanns mit höherer Dringlichkeit angeraten. Tritt das Kollisionsobjekt in das innerste der Kollisionsrechtecke ein, das heißt in das dritte Kollisionsrechteck, kann eine Kollisionsnotfallaktion ausgeführt werden. Zum Beispiel wird dem Fahrer mitgeteilt, dass eine Kollision unmittelbar bevorsteht und/oder das Gespann wird vollständig gestoppt und/oder dem Fahrer wird die Steuerung des Gespanns wieder vollständig übergeben. So lässt sich einfach ein dreistufiges Warnsystem implementieren, mittels dessen es ermöglicht ist, den Fahrer des Gespanns deutlicher über potenzielle Risiken zu informieren und/oder im Falle einer automatischen Bremsung allmählich abzubremsen, bevor er von einer Vollbremsung überrascht wird.

Zum Planen bzw. Erzeugen der neuen Rückwärtsfahrttrajektorien bzw. der neuen fahrzeugindividuellen Rückwärtsfahrtkorridore sieht eine weitere mögliche Ausführungsform vor, dass ein Ausscheren aus der initial geplanten Rückwärtsfahrttrajektorie geplant wird. Hierzu wird an einem Problempunkt der in Schritt S2 initial geplanten Rückwärtsfahrttrajektorie, an dem die Rückwärtsfahrttrajektorie und ein Außenkonturpunkt eines Kollisionsobjekts über einen Minimalabstand voneinander beabstandet sind, eine den Außenkonturpunkt schneidende Senkrechte zur Tangente der Rückwärtsfahrttrajektorie aufgestellt. Dabei wird diejenige der Tangenten der Rückwärtsfahrttrajektorie herangezogen, die im Problempunkt von der Rückwärtsfahrttrajektorie abzweigt. Auf einer dem Außenkonturpunkt gegenüberliegenden Seite der Rückwärtsfahrttrajektorie wird dann in gerader Verlängerung der Senkrechten ein Neuplanungspunkt angelegt, wobei zwischen der initial geplanten Rückwärtsfahrttrajektorie und dem Neuplanungspunkt ein Trajektorienversatzabstand ausgebildet wird. Dieser ist jedenfalls größer als null, aber wird dennoch so gewählt, dass er möglichst nah an der initial geplanten Rückwärtsfahrttrajektorie liegt. Er wird - zumindest beim ersten Planen der Ausscherung - höchstens so lang gewählt, dass durch das Fahrerassistenzsystem ein kollisionsfreies Passieren des Problempunkts mit dem Gespann in erster Näherung als möglich eingestuft wird. Insbesondere wird der Trajektorienversatzabstand begrenzt, und zwar durch eine Sensorreichweite der Sensorik des Zugfahrzeugs, die senkrecht-seitlich der entsprechenden Trajektorie, die mit dem Zugfahrzeug abgefahren wird, jeweils circa vier Meter beträgt. Mit anderen Worten wird der Neuplanungspunkt höchstens an einer seitlichen äußeren Grenze der Sensorreichweite der Sensorik des Zugfahrzeugs angeordnet. Beispielsweise beträgt der Trajektorienversatzabstand höchstens vier Meter, wenn die senkrecht-seitliche Sensorreichweite der Sensorik vier Meter beträgt. Auf der initial geplanten Rückwärtsfahrttrajektorie wird dann ein Ausscherungspunkt ermittelt, der in Bezug zur Rückwärtsfahrtrichtung vor dem Problempunkt auf der initial geplanten Rückwärtsfahrttrajektorie liegt. Das bedeutet, unter einem weiteren Abfahren der Rückwärtsfahrtrajektorie würde das Gespann zuerst den Ausscherungspunkt und dann den Problempunkt erreichen. In Schritt S4 werden, zum Beispiel mittels des Rückwärtsfahrttrajektorienerzeugungsmoduls, zwischen dem Ausscherungspunkt und dem Neuplanungspunkt ein neuer Rückwärtsfahrttrajektorienabschnitt und infolgedessen je Fahrzeug neue fahrzeugindividuelle Rückwärtsfahrtkorridorabschnitte zum Ausscheren aus der initial geplanten Rückwärtsfahrttrajektorie geplant.

Wird beim Planen der neuen fahrzeugindividuellen Rückwärtsfahrtkorridorabschnitte bzw. des neuen Rückwärtsfahrttrajektorienabschnitts zum Ausscheren aus der initial geplanten Rückwärtsfahrttrajektorie festgestellt, dass das Abfahren dieser neuen Rückwärtsfahrtkorridorabschnitte zu einer Sekundärkollision führen würde, ist in möglicher Weiterbildung vorgesehen, dass das Planen der neuen fahrzeugindividuellen Rückwärtsfahrtkorridorabschnitte zum Ausscheren aus der initial geplanten Rückwärtsfahrttrajektorie neugestartet bzw. wiederholt wird. Bei der Sekundärkollision handelt es sich zum Beispiel um eine Kollision mit einem anderen der detektierten Objekte oder mit demselben Objekt, aber mit einem anderen Fahrzeug des Gespanns, oder mit dem entsprechend anderen der Fahrzeuge des Gespanns. Eine solche Sekundärkollision wird erst relevant, wenn das Planen des Ausscherens aus der initial geplanten Rückwärtsfahrttrajektorie wenigstens einmal ausgeführt wurde. Das erneute Planen erfolgt dann mit der Maßgabe, dass der Neuplanungspunkt über einen größeren Trajektorienversatzabstand als beim ersten Durchlauf von der initial geplanten Rückwärtsfahrttrajektorie beabstandet wird, um auch die Sekundärkollision zu vermeiden. Der Neuplanungspunkt wird also weiter in Richtung Sensorreichweitengrenze der Sensorik verschoben, aber auch hier wieder nicht darüber hinaus. Dieses erneute Planen kann beispielsweise erforderlich werden, wenn zwar der ersten Planung nach das Anhängerfahrzeug kollisionsfrei entlang des zugehörigen neuen Rückwärtsfahrtkorridorabschnitts gelenkt werden könnte, hierzu aber das Zugfahrzeug weiter von der initial geplanten Rückwärtsfahrttrajektorie abweichen müsste und infolgedessen mit einem der detektierten Objekte kollidieren würde. Es kann alternativ oder zusätzlich vorgesehen sein, dass das erneute Planen mit der Maßgabe eines näher am Gespann liegenden Ausscherungspunkts erfolgt, sodass ein weniger stark ausholendes Lenken mit dem Zugfahrzeug ausreicht, um den relevanten Kollisionspunkt mit dem Gespann zu umfahren.

In einer möglichen Weiterbildung wird zudem ein Einscheren in die initial geplante Rückwärtsfahrttrajektorie geplant. Hierzu wird auf der initial geplanten Rückwärtsfahrttrajektorie ein Einscherungspunkt ermittelt, der in Bezug zur Rückwärtsfahrtrichtung nach dem Problempunkt auf der initial geplanten Rückwärtsfahrttrajektorie liegt. Das bedeutet, unter einem weiteren Abfahren der Rückwärtsfahrtrajektorie würde das Gespann zuerst den Problempunkt und dann den Einscherungspunkt erreichen. In Schritt S4 werden, zum Beispiel mittels des Rückwärtsfahrttrajektorienerzeugungsmoduls, zwischen dem Neuplanungspunkt und dem Einscherungspunkt ein weiterer neuer Rückwärtsfahrttrajektorienabschnitt und infolgedessen je Fahrzeug weitere neue fahrzeugindividuelle Rückwärtsfahrtkorridorabschnitte zum Einscheren in die initial geplante Rückwärtsfahrttrajektorie geplant.

Wird beim Planen der neuen fahrzeugindividuellen Rückwärtsfahrtkorridorabschnitte bzw. des neuen Rückwärtsfahrttrajektorienabschnitts zum Einscheren in die initial geplante Rückwärtsfahrttrajektorie festgestellt, dass das Abfahren dieser neuen Rückwärtsfahrtkorridorabschnitte zu einer weiteren/anderen Sekundärkollision führen würde, ist in möglicher Weiterbildung vorgesehen, dass das Planen der neuen fahrzeugindividuellen Rückwärtsfahrtkorridorabschnitte zum Einscheren in die initial geplante Rückwärtsfahrttrajektorie neugestartet bzw. wiederholt wird. Die weitere/andere Sekundärkollision wird erst relevant, wenn das Planen des Einscherens in die initial geplante Rückwärtsfahrttrajektorie wenigstens einmal ausgeführt wurde. Das erneute Planen erfolgt dann mit der Maßgabe, dass ein weiter entfernt vom Gespann liegenden Einscherungspunkt ermittelt, sodass ein weniger stark ausholendes Lenken mit dem Zugfahrzeug ausreicht, um den relevanten Kollisionspunkt mit dem Gespann zu umfahren. Es kann alternativ oder zusätzlich vorgesehen sein, dass das Planen des Ausscherens aus der initial geplanten Rückwärtsfahrttrajektorie wie oben beschrieben wiederholt wird und dabei der Neuplanungspunkt noch weiter an die Sensorreichweitengrenze der Sensorik verschoben wird. Durch das Planen des Aus- bzw. des Einscherens wird bei dem Verfahren in vorteilhafter Weise nur in besonders geringem Maße von der initial geplanten Rückwärtsfahrttrajektorie abgewichen.

Eine weitere mögliche Ausgestaltung sieht vor, dass das Ausscheren aus der initial geplanten Rückwärtsfahrttrajektorie und das Einscheren in die initial geplante Rückwärtsfahrttrajektorie für die gesamte geplante Rückwärtsfahrttrajektorie geplant wird, bevor das Fahrerassistenzsystem bzw. dessen Fahrzeugsteuerungsmodul in die Querführung des Zugfahrzeugs erstmals eingreift. Mit anderen Worten reicht ein Planungshorizont bis an das Ende der geplanten Rückwärtsfahrttrajektorie. So kann besonders sicher und flüssig assistiert rückwärts gefahren werden.

Gemäß einer Alternative hierzu wird das Ausscheren aus der initial geplanten Rückwärtsfahrttrajektorie geplant, sobald mittels des Fahrerassistenzsystems ermittelt wird, dass zwischen einer aktuellen Position des Gespanns und dem Problempunkt ein vorgegebener Planungsmindestabstand erreicht worden ist. Das Einscheren in die initial geplante Rückwärtsfahrttrajektorie wird in diesem Fall geplant, wenn das Gespann sich auf dem neuen Rückwärtsfahrttrajektorienabschnitt befindet. In dem Fall deckt der Planungshorizont lediglich eine Teilstrecke der geplanten Rückwärtsfahrttrajektorie ab, wodurch bei dem Verfahren erforderliche Rechenleistung eingespart werden kann. Dadurch kann das Verfahren besonders effizient ausgeführt werden.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt zur Verdeutlichung eines Verfahrens zum assistierten Rückwärtsfahren mit einem Fahrzeuggespann in
- Fig. 1: eine schematisierte Draufsicht auf das Fahrzeuggespann in Vorwärtsfahrt,
- Fig. 2: eine schematisierte Draufsicht auf das Fahrzeuggespann in simulierter Rückwärtsfahrt, wobei Objekte, die bei der Vorwärtsfahrt detektiert wurden, als jeweiliges Kollisionsobjekt klassifiziert werden,
- Fig. 3: eine schematisierte Draufsicht auf das Fahrzeuggespann am Beginn einer mittels eines Fahrerassistenzsystems assistierten Rückwärtsfahrt, wobei Objekte ein kollisionsfreies Rückwärtsfahren verhindern,
- Fig. 4: eine schematisierte Draufsicht auf das Fahrzeuggespann, wobei ein Ausscheren aus einer initial geplanten Rückwärtsfahrttrajektorie geplant wird,

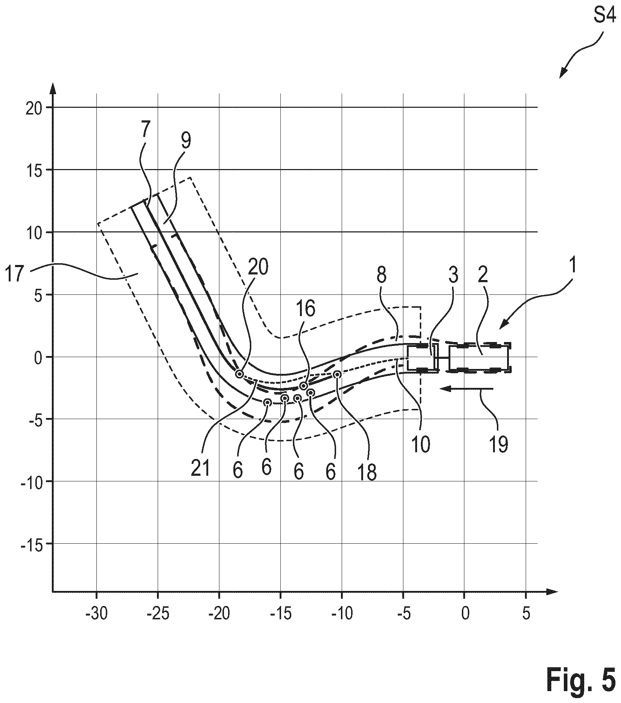

- Fig. 5: eine schematisierte Draufsicht auf das Fahrzeuggespann, wobei ein Einscheren in die initial geplante Rückwärtsfahrttrajektorie geplant wird,
- Fig. 6: eine schematisierte Draufsicht auf das Fahrzeuggespann, für das eine kollisionsfreie Rückwärtsfahrttrajektorie geplant wurde,
- Fig. 7: eine schematisierte Draufsicht auf das Fahrzeuggespann, wobei eine tatsächliche Rückwärtsfahrttrajektorie eines Anhängerfahrzeugs des Gespanns von der kollisionsfreien, neugeplanten Rückwärtsfahrttrajektorie abweicht, und
- Fig. 8: eine schematisierte Draufsicht auf das Fahrzeuggespann beim Ausführen eines Vorwärts-Korrekturzugs.

Im Folgenden wird zu einem Verfahren zum assistierten Rückwärtsfahren mit einem Gespann 1, zu einem zum Ausführen des Verfahrens konfigurierten Fahrerassistenzsystem sowie zu einem Kraftfahrzeug, das das Fahrerassistenzsystem aufweist, in gemeinsamer Beschreibung vorgetragen. Gleiche oder funktionsgleiche Elemente sind in den Figuren mit gleichem Bezugszeichen versehen.

Bei dem Gespann 1 handelt es sich um ein Fahrzeuggespann, das ein Zugfahrzeug 2 und ein an das Zugfahrzeug 2 mittels einer Anhängerkupplung angekuppeltes Anhängerfahrzeug 3 aufweist. Eines der Fahrzeuge 2, 3, vorliegend das Zugfahrzeug 2, ist mit einem Fahrerassistenzsystem ausgestattet, das zum Ausführen des Verfahrens konfiguriert ist. Das Zugfahrzeug 2 ist hier als ein Personenkraftwagen ausgebildet.

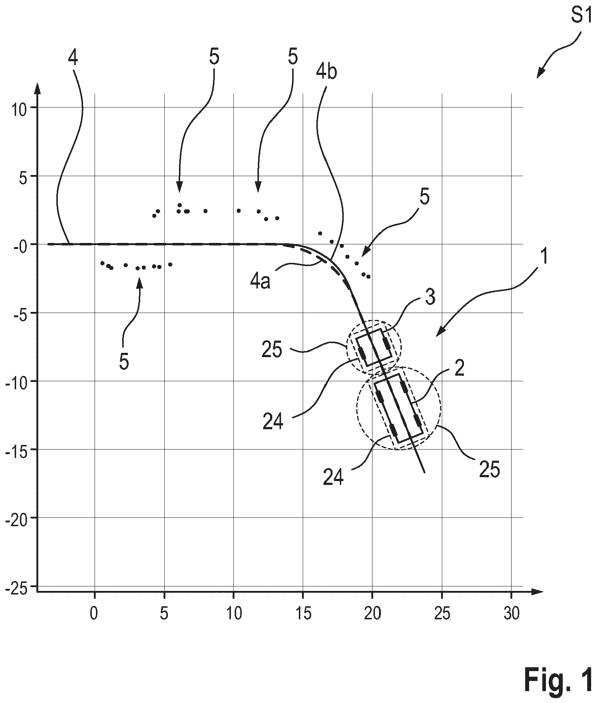

Bei dem Verfahren zum assistierten Rückwärtsfahren mit dem Gespann 1 wird zunächst in einem Schritt S1 des Verfahrens mit dem Gespann 1 vorwärts gefahren. Dies ist in Fig. 1 dargestellt, die eine schematisierte Draufsicht auf das Gespann 1 in Vorwärtsfahrt zeigt. Dabei wird eine die Vorwärtsfahrt charakterisierende Vorwärtsfahrttrajektorie 4 des Gespanns 1 in einem als Ringspeicher ausgeführten Trajektorienspeicher des Fahrerassistenzsystems gespeichert. Eine Vorwärtsfahrttrajektorie 4a des Zugfahrzeugs 2 und eine Vorwärtsfahrttrajektorie 4b des Anhängerfahrzeugs 3 weichen bei Vorwärtsfahrt des Gespanns 1 kaum voneinander ab, sodass sie als deckungsgleich angenommen werden. Mittels einer Sensorik des Zugfahrzeugs 2 wird während der Vorwärtsfahrt eine Punktwolke erfasst, die Objekte 5 detektiert, die seitlich neben der Vorwärtsfahrttrajektorie 4 angeordnet sind. Die mittels der Sensorik erfasste Punktwolke wird in einem Objektspeicher des Fahrerassistenzsystems gespeichert.

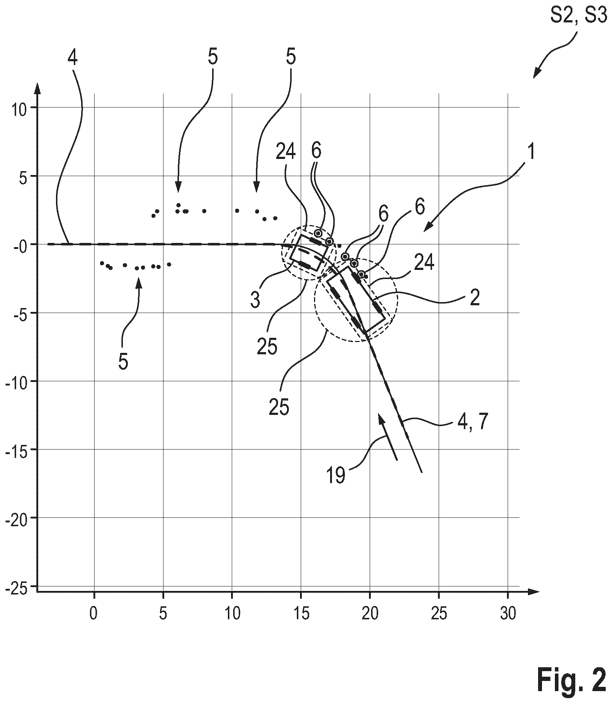

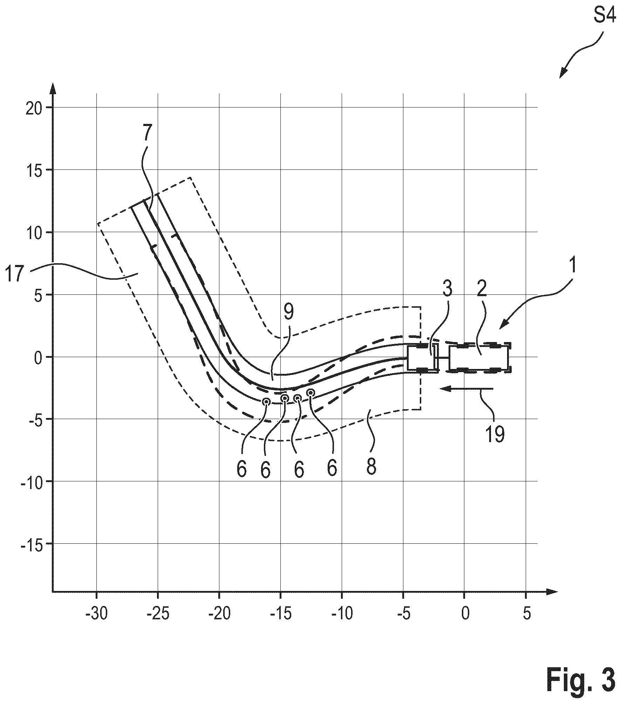

Fig. 2 zeigt eine schematisierte Draufsicht auf das Gespann 1 in simulierter Rückwärtsfahrt, wobei die Objekte 5, die bei der Vorwärtsfahrt detektiert wurden, als jeweiliges Kollisionsobjekt 6 klassifiziert werden. Während oder nach Beendigung der Vorwärtsfahrt werden in einem Schritt S2, hier im Beispiel mittels eines Rückwärtsfahrttrajektorienerzeugungsmoduls des Fahrerassistenzsystems, eine Rückwärtsfahrttrajektorie 7 für das Gespann 1 und damit korrespondierende fahrzeugindividuelle Rückwärtsfahrtkorridore 8, 9 (siehe Fig. 3) für die Fahrzeuge 2, 3 geplant. Die Rückwärtsfahrttrajektorie 7 des Gespanns 1 wird dabei so geplant, dass sie möglichst wenig von der gefahrenen Vorwärtsfahrttrajektorie 4 abweicht. Die Vorwärtsfahrttrajektorie 4 fungiert somit als eine Referenztrajektorie für die anstehende Rückwärtsfahrt. Die mit der Rückwärtsfahrttrajektorie 7 korrespondierenden fahrzeugindividuellen Rückwärtsfahrtkorridore 8, 9 werden je Fahrzeug 2, 3 separat geplant. Es werden also ein Rückwärtsfahrtkorridor 8 für das Zugfahrzeug 2 und ein Rückwärtsfahrtkorridor 9 für das Anhängerfahrzeug 3 geplant. In einem Schritt S3 des Verfahrens erfolgt ein Klassifizieren der detektierten Objekte 5, vorliegend mittels eines Objektklassifizierungsmoduls des Fahrerassistenzsystems. Dabei wird das jeweilige detektierte Objekt 5 als Kollisionsobjekt 6 klassifiziert, wenn das entsprechende Objekt in einem oder in beiden der geplanten Rückwärtsfahrtkorridore 8, 9 liegt. Hierzu wird zum Beispiel eine Rückwärtsfahrt entlang der in Schritt S2 initial geplanten Rückwärtsfahrttrajektorie 7 simuliert, wie es in Fig. 2 dargestellt ist.

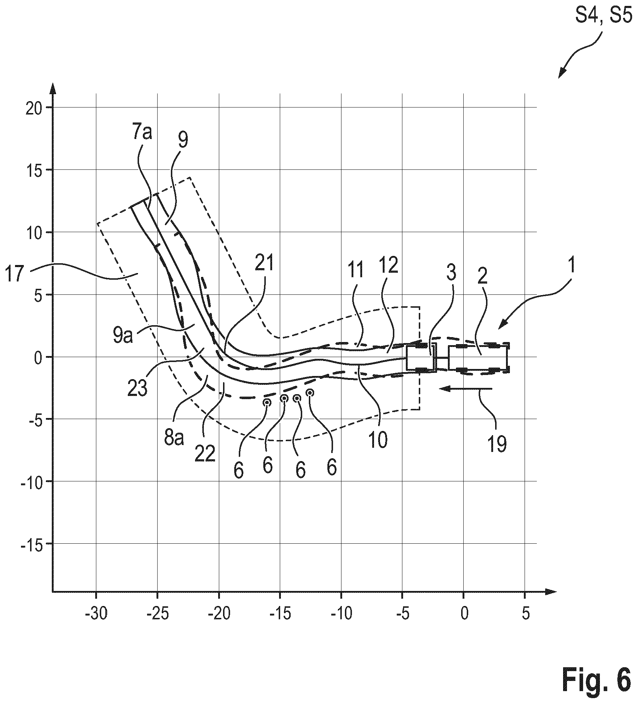

Fig. 3 zeigt eine schematisierte Draufsicht auf das Gespann 1 am Beginn einer mittels eines Fahrerassistenzsystems assistierten Rückwärtsfahrt, wobei Kollisionsobjekte 6 ein kollisionsfreies Rückwärtsfahren des Gespanns 1 zunächst verhindern. Denn wie zu erkennen ist, liegen Kollisionsobjekte 6 im Rückwärtsfahrtkorridor 9 des Anhängerfahrzeugs 3. Ein Schritt S4 des Verfahrens sieht in so einem Fall vor, dass mittels des Rückwärtsfahrttrajektorienerzeugungsmoduls eine neue Rückwärtsfahrttrajektorie 7a (siehe Fig. 6) und infolgedessen je Fahrzeug 2, 3 ein jeweiliger neuer fahrzeugindividueller Rückwärtsfahrtkorridor 8a, 9a (siehe Fig. 6) erzeugt werden. Der jeweilige neue fahrzeugindividuelle Rückwärtsfahrtkorridor 8a, 9a wird dabei so erzeugt, dass er vom jeweiligen in Schritt S2 geplanten Rückwärtsfahrtkorridor 8, 9 möglichst wenig abweicht. Die beiden neuen Rückwärtsfahrtkorridore 8a, 9a werden aber jedenfalls so erzeugt, dass die Kollisionsobjekte 6 in keinem der neuen fahrzeugindividuellen Rückwärtsfahrtkorridore 8a, 9a liegen.

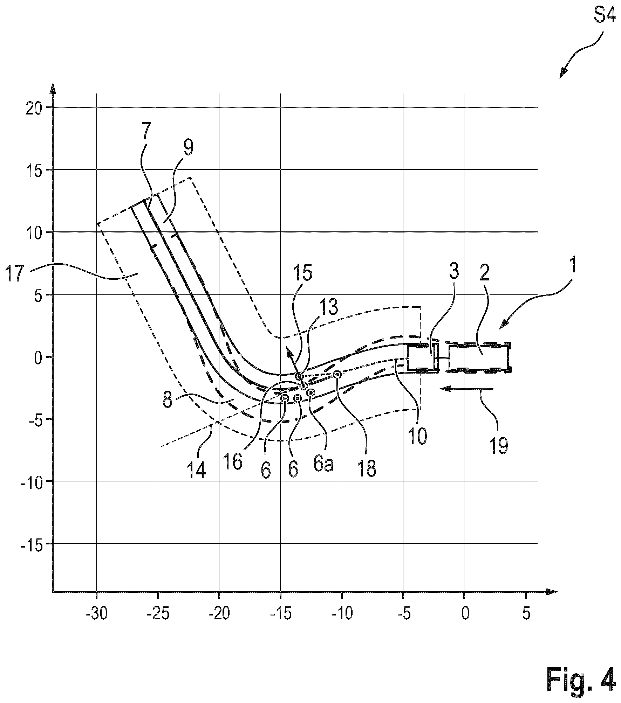

Fig. 4 zeigt eine schematisierte Draufsicht auf das Gespann 1, wobei ein Ausscheren aus der geplanten Rückwärtsfahrttrajektorie 7 geplant wird, wodurch ein erster neuer Rückwärtsfahrttrajektorienabschnitt 10 und infolgedessen erste neue fahrzeugindividuelle Rückwärtsfahrtkorridorabschnitte 11, 12 (siehe Fig. 6) zum Ausscheren aus der initial geplanten Rückwärtsfahrttrajektorie 7 geplant werden. Hierzu wird ein auf der in Schritt S2 initial geplanten Rückwärtsfahrttrajektorie 7 liegender Problempunkt 13 ermittelt, an dem die Rückwärtsfahrttrajektorie 7 und ein Außenkonturpunkt 6a eines Kollisionsobjekts 6 über einen Minimalabstand voneinander beabstandet sind. Dann wird eine Tangente 14 der Rückwärtsfahrttrajektorie 7 bestimmt, die im Problempunkt 13 abzweigt. Sodann wird eine den Außenkonturpunkt 6a schneidende Senkrechte 15 zur Tangente 14 aufgestellt. Auf einer dem Außenkonturpunkt 6a gegenüberliegenden Seite der Rückwärtsfahrttrajektorie 7 wird dann in gerader Verlängerung der Senkrechten 15 ein Neuplanungspunkt 16 angeordnet, wobei zwischen der initial geplanten Rückwärtsfahrttrajektorie 7 und dem Neuplanungspunkt ein Trajektorienversatzabstand ausgebildet wird. Dieser ist jedenfalls größer als null, aber wird dennoch so gewählt, dass er möglichst nah an der initial geplanten Rückwärtsfahrttrajektorie 7 liegt. Er wird - zumindest beim ersten Planen der Ausscherung - höchstens so lang gewählt, dass durch das Fahrerassistenzsystem ein kollisionsfreies Passieren des Problempunkts 13 mit dem Gespann 1 in erster Näherung als möglich eingestuft wird. Insbesondere wird der Trajektorienversatzabstand begrenzt, und zwar durch eine Sensorreichweite 17 der Sensorik des Zugfahrzeugs 2, die senkrecht-seitlich der entsprechenden Trajektorie 4, 7, 7a, die mit dem Zugfahrzeug 2 abgefahren wird, jeweils circa vier Meter beträgt. Auf der initial geplanten Rückwärtsfahrttrajektorie 7 wird dann ein Ausscherungspunkt 18 ermittelt, der in Bezug zur Rückwärtsfahrtrichtung 19 vor dem Problempunkt 13 auf der initial geplanten Rückwärtsfahrttrajektorie 7 liegt. In Schritt S4 werden, hier im Beispiel mittels des Rückwärtsfahrttrajektorienerzeugungsmoduls, zwischen dem Ausscherungspunkt 18 und dem Neuplanungspunkt 16 der erste neue Rückwärtsfahrttrajektorienabschnitt 10 und infolgedessen je Fahrzeug 2, 3 die neuen fahrzeugindividuellen Rückwärtsfahrtkorridorabschnitte 11, 12 zum Ausscheren aus der initial geplanten Rückwärtsfahrttrajektorie 7 geplant.

Wird beim Planen der neuen fahrzeugindividuellen Rückwärtsfahrtkorridorabschnitte 11, 12 bzw. des neuen Rückwärtsfahrttrajektorienabschnitts 10 zum Ausscheren aus der initial geplanten Rückwärtsfahrttrajektorie 7 festgestellt, dass das Abfahren dieser neuen Rückwärtsfahrtkorridorabschnitte 10, 11 zu einer Sekundärkollision führen würde, ist vorgesehen, dass das Planen der neuen fahrzeugindividuellen Rückwärtsfahrtkorridorabschnitte 11,12 neugestartet bzw. wiederholt wird. Das erneute Planen erfolgt dann mit der Maßgabe, dass der Neuplanungspunkt 16 über einen größeren Trajektorienversatzabstand als beim ersten Durchlauf von der initial geplanten Rückwärtsfahrttrajektorie 7 beabstandet wird, um auch die Sekundärkollision zu vermeiden. Alternativ oder zusätzlich erfolgt das erneute Planen mit der Maßgabe eines näher am Gespann 1 liegenden Ausscherungspunkts 18.

Vorliegend wird zudem ein Einscheren in die initial geplante Rückwärtsfahrttrajektorie 7 geplant. Hierzu wird auf der initial geplanten Rückwärtsfahrttrajektorie 7 ein Einscherungspunkt 20 ermittelt, der in Bezug zur Rückwärtsfahrtrichtung 19 nach dem Problempunkt 13 auf der initial geplanten Rückwärtsfahrttrajektorie 7 liegt. In Schritt S4 werden, hier mittels des Rückwärtsfahrttrajektorienerzeugungsmoduls, zwischen dem Neuplanungspunkt 16 und dem Einscherungspunkt 20 ein zweiter neuer Rückwärtsfahrttrajektorienabschnitt 21 und infolgedessen je Fahrzeug ein zweiter neuer fahrzeugindividueller Rückwärtsfahrtkorridorabschnitt 22, 23 zum Einscheren in die initial geplante Rückwärtsfahrttrajektorie 7 geplant.

Wird beim Planen der zweiten neuen fahrzeugindividuellen Rückwärtsfahrtkorridorabschnitte 22, 23 bzw. des neuen Rückwärtsfahrttrajektorienabschnitts 21 zum Einscheren in die initial geplante Rückwärtsfahrttrajektorie 7 festgestellt, dass das Abfahren dieser neuen Rückwärtsfahrtkorridorabschnitte 22, 23 zu einer weiteren/anderen Sekundärkollision führen würde, ist vorgesehen, dass das Planen der zweiten neuen fahrzeugindividuellen Rückwärtsfahrtkorridorabschnitte 22, 23 neugestartet bzw. wiederholt wird. Das erneute Planen erfolgt dann mit der Maßgabe, dass ein weiter entfernt vom Gespann 1 liegender Einscherungspunkt 20 ermittelt wird. Alternativ oder zusätzlich wird das Planen des Ausscherens aus der initial geplanten Rückwärtsfahrttrajektorie 7 wie oben beschrieben wiederholt, wobei der Neuplanungspunkt 16 noch weiter an einen Rand der Sensorreichweite 17 verschoben wird.

Fig. 6 zeigt eine schematisierte Draufsicht auf das Gespann 1, für das die kollisionsfreie, neue Rückwärtsfahrttrajektorie 7a geplant wird/wurde. Basierend auf der neuen Rückwärtsfahrttrajektorie 7a wird das Gespann 1 in einem Rückwärtsfahrtassistenzbetriebsmodus mithilfe eines Fahrzeugsteuerungsmoduls des Fahrerassistenzsystems rückwärts gefahren, wobei das Fahrzeugsteuerungsmodul des Fahrerassistenzsystems in eine Querführung des Zugfahrzeugs 2 zumindest derart eingreift, dass das Gespann 1 entlang der neuen, die neuen Rückwärtsfahrttrajektorienabschnitte 10, 21 aufweisenden Rückwärtsfahrttrajektorie 7a und infolgedessen durch die neuen fahrzeugindividuellen Rückwärtsfahrtkorridore 8a, 9a hindurchgefahren wird, die die neuen Rückwärtsfahrtkorridorabschnitte 11, 12, 22, 23 aufweisen. Vorliegend übernimmt das Fahrerassistenzsystem in Schritt S5 die Querführung des Zugfahrzeugs 2 und/oder eine Längsführung des Zugfahrzeugs 2 vollständig.

Das Ausscheren aus der initial geplanten Rückwärtsfahrttrajektorie 7 und das Einscheren in die initial geplante Rückwärtsfahrttrajektorie 7 kann für die gesamte initial geplante Rückwärtsfahrttrajektorie 7 vorgeplant werden, bevor das Fahrerassistenzsystem bzw. dessen Fahrzeugsteuerungsmodul in die Querführung des Zugfahrzeugs 2 erstmals eingreift. Alternativ wird das Ausscheren aus der initial geplanten Rückwärtsfahrttrajektorie 7 geplant, sobald mittels des Fahrerassistenzsystems ermittelt wird, dass zwischen einer aktuellen Position des Gespanns 1 und dem Problempunkt 13 ein vorgegebener Planungsmindestabstand erreicht worden ist. Das Einscheren in die initial geplante Rückwärtsfahrttrajektorie 7 wird in diesem Fall geplant, wenn das Gespann 1 sich auf dem ersten neuen Rückwärtsfahrttrajektorienabschnitt 10 befindet.

Unter erneuter Bezugnahme auf Fig. 1 und Fig. 2 wird erläutert, dass gemäß dem vorliegend beschriebenen Beispiel dem Fahrerassistenzsystem je Fahrzeug 2, 3 ein erstes imaginäres Kollisionsrechteck 24 vorgegeben wird, das das entsprechende Fahrzeug 2, 3 vollständig einschließt und mit dem Fahrzeug 2, 3 mitgeführt wird. Das Kollisionsrechteck 24 wird vorliegend jeweils so vorgegeben, dass eine Außenkontur des zugehörigen Fahrzeugs 2, 3 und die Kanten des Kollisionsrechtecks 24 über einen ersten Sicherheitsabstand von 25 cm voneinander beabstandet sind. Zudem wird dem Fahrerassistenzsystem je Fahrzeug 2, 3 ein imaginärer Umkreis 25 vorgegeben, auf dem stets die Eckpunkte des zugehörigen Kollisionsrechtecks 24 liegen. Es ist des Weiteren im Beispiel vorgesehen, dass die detektierten Objekte 5 jeweils als kritisches Objekt klassifiziert werden, wenn bei der Vorwärtsfahrt das entsprechende Objekt 5 von einem oder beiden der Umkreise 25 geschnitten wurde. Es werden dann in Schritt S3 des Verfahrens nur diejenigen der detektierten Objekte 5 gegebenenfalls als jeweiliges Kollisionsobjekt 6 klassifiziert, die beim mittels des Fahrerassistenzsystems assistierten Rückwärtsfahren vom Kollisionsrechteck 24 geschnitten werden würden.

Optional werden je Fahrzeug 2, 3 ein zweites imaginäres Kollisionsrechteck, das vollständig innerhalb des ersten Kollisionsrechtecks 24 liegt, und ein drittes imaginäres Kollisionsrechteck, das vollständig innerhalb des zweiten Kollisionsrechtecks liegt, vorgegeben werden. In diesem Fall sind dann die Kanten des ersten Kollisionsrechtecks 24 und die Außenkontur des zugehörigen Fahrzeugs dann über den ersten Sicherheitsabstand voneinander beabstandet, der dann 75 cm beträgt. Die Kanten des zweiten Kollisionsrechtecks und die Kanten des ersten Kollisionsrechtecks 24 sind zum Beispiel 25 cm voneinander beabstandet, wodurch die Kanten des zweiten Kollisionsrechtecks und die Außenkontur des zugehörigen Fahrzeugs 2, 3 über einen zweiten Sicherheitsabstand von 50 cm voneinander beabstandet sind. Des Weiteren sind die Kanten des dritten Kollisionsrechtecks und die Kanten des zweiten Kollisionsrechtecks zum Beispiel 25 cm voneinander beabstandet, wodurch die Kanten des dritten Kollisionsrechtecks und die Außenkontur des zugehörigen Fahrzeugs 2, 3 über einen dritten Sicherheitsabstand von 25 cm voneinander beabstandet sind. Beim mittels des Fahrerassistenzsystems assistierten Rückwärtsfahren wird in diesem Fall das jeweilige Kollisionsobjekt 6 solange als ein Hinweisobjekt klassifiziert, solange das entsprechende Kollisionsobjekt 6 vom ersten Kollisionsrechteck 24, aber weder vom zweiten Kollisionsrechteck noch vom dritten Kollisionsrechteck geschnitten wird. In Reaktion auf das Hinweisobjekt wird mittels des Fahrerassistenzsystems eine Hinweisaktion ausgeführt. Zum Beispiel wird dem Fahrer mitgeteilt, dass das Gespann 1 sich dem Kollisionsobjekt 6 nähert und/oder eine Fahrgeschwindigkeit des Gespanns 1 wird reduziert und/oder dem Fahrer wird die vollständige oder teilweise Wiederübernahme der Steuerung des Gespanns 1 angeboten. Weiter wird beim assistierten Rückwärtsfahren das jeweilige Kollisionsobjekt 6 solange als ein Warnobjekt klassifiziert, solange das entsprechende Kollisionsobjekt 6 vom ersten Kollisionsrechteck 24 und vom zweiten Kollisionsrechteck, aber nicht vom dritten Kollisionsrechteck geschnitten wird, wobei in Reaktion auf das Warnobjekt mittels des Fahrerassistenzsystems eine Warnaktion ausgeführt wird. Zum Beispiel wird dem Fahrer mitgeteilt, dass dem Gespann 1 eine Kollision droht und/oder eine Fahrgeschwindigkeit des Gespanns 1 wird auf weiter/stärker reduziert und/oder dem Fahrer wird die vollständige Wiederübernahme der Steuerung des Gespanns 1 mit höherer Dringlichkeit angeraten. Tritt das Kollisionsobjekt 6 in das innerste der Kollisionsrechtecke ein, das heißt in das dritte Kollisionsrechteck, kann eine Kollisionsnotfallaktion ausgeführt werden. Zum Beispiel wird dem Fahrer mitgeteilt, dass eine Kollision unmittelbar bevorsteht und/oder das Gespann 1 wird vollständig gestoppt und/oder dem Fahrer wird die Steuerung des Gespanns 1 wieder vollständig übergeben.

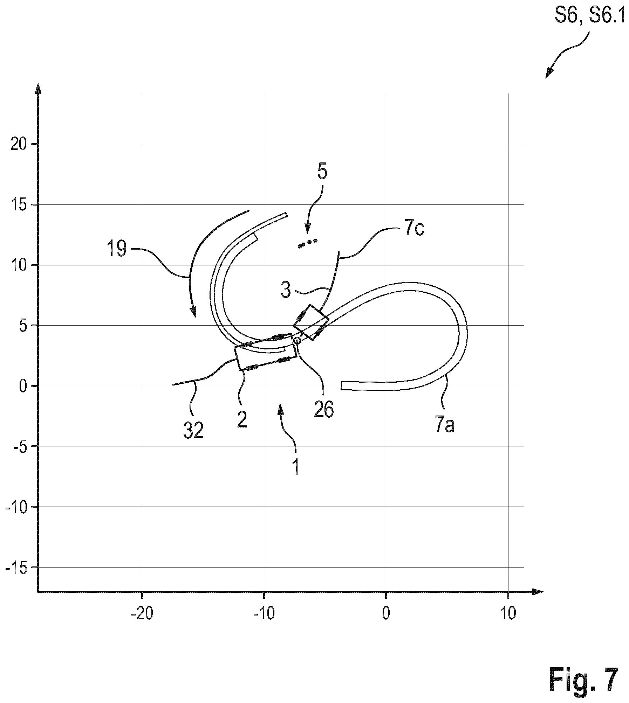

Fig. 7 zeigt eine schematisierte Draufsicht auf das Gespann 1, wobei eine tatsächliche Rückwärtsfahrttrajektorie eines Anhängerfahrzeugs des Gespanns 1 von der kollisionsfreien, neugeplanten Rückwärtsfahrttrajektorie 7a abweicht. In einem Schritt S6 des Verfahrens wird mittels des einer Abweichungserfassungseinheit des Fahrerassistenzsystems beim assistierten Rückwärtsfahren eine aktuelle Abweichung einer tatsächlichen Rückwärtsfahrttrajektorie 7b des Anhängerfahrzeugs 3 von der neuen Rückwärtsfahrttrajektorie 7a ermittelt. Wenn die aktuelle Abweichung größer als eine zulässige Grenzabweichung ist, wird mittels des Fahrerassistenzsystems das Gespann 1 zum Ausführen einer Korrekturaktion vollständig gestoppt. Die Korrekturaktion kann ganz oder teilweise vom Fahrerassistenzsystem ausgeführt werden. Nachdem die Korrekturaktion ausgeführt wurde, wird die assistierte Rückwärtsfahrt wiederaufgenommen bzw. reaktiviert.

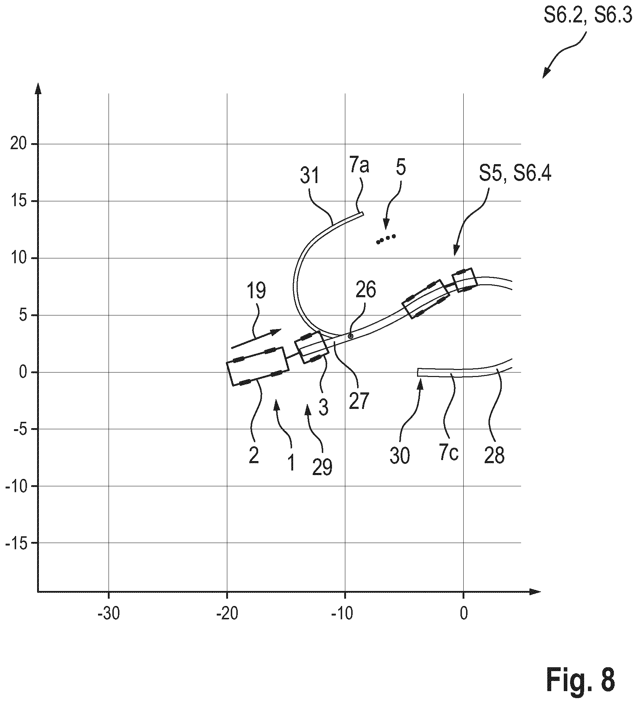

Gemäß dem vorliegend beschriebenen Beispiel wird für die Korrekturaktion in einem Schritt S6.1 ein auf der neuen Rückwärtsfahrttrajektorie 7a liegender Abweichungspunkts 26 ermittelt, vorliegend mittels eines Abweichungserfassungsmoduls des Fahrerassistenzsystems. Am Abweichungspunkt 26 hat die die Abweichung der tatsächlichen Anhängerfahrzeug-Rückwärtsfahrttrajektorie 7b die Grenzabweichung überschritten. In einem Schritt S6.2 ist dann vorgesehen, dass ein Vorwärts-Korrekturzug ausgeführt wird, bei welchem mit dem Gespann vorwärts gefahren wird. Dies ist in Fig. 8 gezeigt. Es wird also zum Ausführen des Vorwärts-Korrekturzugs eine Fahrtrichtung des Gespanns 1 bzw. des Zugfahrzeugs 2 umgeschaltet. Mittels des Rückwärtsfahrttrajektorienerzeugungsmoduls, wird dann in einem Schritt S6.3 eine korrigierte Rückwärtsfahrttrajektorie 7c erzeugt. Diese weist zwei Trajektorienabschnitte 27, 28 auf, nämlich einen ersten Trajektorienabschnitt 27 und einen daran anschließenden, zweiten Trajektorienabschnitt 28. Der erste Trajektorienabschnitt 27 verbindet eine Endposition 29 des Gespanns, die es nach dem Vorwärts-Korrekturzug erreicht hat, und den Abweichungspunkt 26. Der zweite Trajektorienabschnitt 28 verbindet den Abweichungspunkt 26 und ein Ende 30 der neuen Rückwärtsfahrttrajektorie 7a. Hierzu wird der zweite Trajektorienabschnitt 28 so geplant, dass er zwischen dem Abweichungspunkt 26 und dem Ende 30 der neuen Rückwärtsfahrttrajektorie 7a möglichst wenig von dieser abweicht. Ferner ist vorgesehen, dass ein zuvor erfolgreich absolvierter Abschnitt 31 der neuen Rückwärtsfahrttrajektorie 7a aus dem Ringspeicher des Fahrerassistenzsystems gelöscht wird, um Speicherkapazität zu sparen. In einem Schritt S6.4 wird mithilfe des Fahrerassistenzsystems mit dem Gespann 1 rückwärts gefahren, wobei das Fahrerassistenzsystem in die Querführung des Zugfahrzeugs 2 zumindest derart eingreift, dass das Gespann 1 entlang der korrigierten Rückwärtsfahrttrajektorie 7c fährt.

Vorliegend ist vorgesehen, dass das Fahrerassistenzsystem in Schritt S6.4 die Querführung und/oder eine Längsführung des Zugfahrzeugs 2 vollständig übernimmt. Mit anderen Worten erfolgt das Rückwärtsfahren mit dem Gespann 1 entlang der korrigierten Rückwärtsfahrttrajektorie 7c vollautonom.

In Weiterbildung wird mittels des Fahrerassistenzsystems eine ideale Endposition für den Vorwärts-Korrekturzug geplant. Die ideale Endposition zeichnet sich dadurch aus, dass sie besonders einfach bzw. effizient mit dem Gespann 1 erreicht werden kann und genau so weit von der neuen Rückwärtsfahrttrajektorie 7a entfern ist, dass nach dem Vorwärts-Korrekturzug besonders einfach wieder in die neue Rückwärtsfahrttrajektorie 7a eingeschert werden kann. Mittels des Fahrerassistenzsystems wird dann für den Vorwärts-Korrekturzug hin zur idealen Endposition eine Korrekturfahrttrajektorie 32 (siehe Fig. 7) geplant, zum Beispiel mittels des Rückwärtsfahrttrajektorienerzeugungsmoduls. Die Korrekturfahrttrajektorie 32 kann eine Gerade oder eine ungerade Kurve sein. Ferner kann die Korrekturfahrttrajektorie 32 sowohl gerade als auch ungerade Anteile aufweisen. Es wird dann der Vorwärts-Korrekturzug entlang der Korrekturfahrttrajektorie 32 ausgeführt. Davor, gleichzeitig oder danach wird mittels des Fahrerassistenzsystems zwischen der idealen Endposition und dem Abweichungspunkt 26 der erste Trajektorienabschnitt 27 geplant, der, wie oben beschrieben, Teil der korrigierten Rückwärtsfahrttrajektorie 7c ist.

Zum Ausführen des Vorwärts-Korrekturzugs kann die vollständige Steuerung der Längs- und der Querführung des Zugfahrzeugs 2 an den menschlichen Fahrer übergeben werden, woraufhin dieser den Vorwärts-Korrekturzug mit dem Gespann 1 ausführt. Dabei kann der Fahrer vom Fahrerassistenzsystem - auch wenn es in so einem Fall nicht aktiv in die Längs- und/oder Querführung des Zugfahrzeugs 2 eingreift - unterstützt werden, etwa indem dem Fahrer der zu fahrende Vorwärts-Korrekturzug angezeigt wird, zum Beispiel in einem Display des Zugfahrzeugs 2. Vorliegend ist vorgesehen, dass zum Ausführen des Vorwärts-Korrekturzugs das Fahrerassistenzsystem die Querführung 2 und/oder die Längsführung des Zugfahrzeugs 2 vollständig übernimmt. Das bedeutet, dass das Ausführen des Vorwärts-Korrekturzugs teil- oder vollautonom durchgeführt wird.

Es ist insbesondere vorgesehen, dass die Schritte S1 bis S5 analog angewendet werden, um den Vorwärts-Korrekturzug auszuführen und um über den Abweichungspunkt 26 wieder auf die neue Rückwärtsfahrttrajektorie 7a aufzufahren.

Die aktuelle Abweichung der tatsächlichen Anhängerfahrzeug-Rückwärtsfahrttrajektorie 7b von der neuen Rückwärtsfahrttrajektorie 7a wird beispielsweise ermittelt, indem während der mittels des Fahrerassistenzsystems assistierten Rückwärtsfahrt an einem auf der neuen Rückwärtsfahrttrajektorie 7a liegenden aktuellen Positionspunkt des Gespanns 1 ein euklidischer Abstand zwischen der tatsächlichen Anhängerfahrzeug-Rückwärtsfahrttrajektorie 7b und dem aktuellen Positionspunkt bestimmt wird. Alternativ oder zusätzlich wird die aktuelle Abweichung ermittelt, indem während der Rückwärtsfahrt am aktuellen Positionspunkt des Gespanns 1 ein Winkel zwischen einer im aktuellen Positionspunkt von der neuen Rückwärtsfahrttrajektorie 7a abzweigenden Tangente und einer Tangente der tatsächlichen Anhängerfahrzeug-Rückwärtsfahrttrajektorie 7b bestimmt wird.

### Bezugszeichenliste

- 1: Gespann
- 2: Zugfahrzeug
- 3: Anhängerfahrzeug
- 4: Vorwärtsfahrttrajektorie des Gespanns
- 4a: Vorwärtsfahrttrajektorie des Zugfahrzeugs
- 4b: Vorwärtsfahrttrajektorie des Anhängerfahrzeugs
- 5: Objekt
- 6: Kollisionsobjekt
- 6a: Außenkonturpunkt
- 7: Rückwärtsfahrttrajektorie des Gespanns
- 7a: neue Rückwärtsfahrttrajektorie
- 7b: tatsächliche Anhängerfahrzeug-Rückwärtsfahrttrajektorie
- 7c: korrigierte Rückwärtsfahrttrajektorie
- 8: Rückwärtsfahrtkorridor des Zugfahrzeugs
- 8a: neuer Rückwärtsfahrtkorridor des Zugfahrzeugs
- 9: Rückwärtsfahrtkorridor des Anhängerfahrzeugs
- 9a: neuer Rückwärtsfahrtkorridor des Anhängerfahrzeugs
- 10: erster neuer Rückwärtsfahrttrajektorienabschnitt
- 11: erster neuer Rückwärtsfahrtkorridorabschnitt des Zugfahrzeugs
- 12: erster neuer Rückwärtsfahrtkorridorabschnitt des Anhängerfahrzeugs
- 13: Problempunkt
- 14: Tangente
- 15: Senkrechte
- 16: Neuplanungspunkt
- 17: Sensorreichweite
- 18: Ausscherungspunkt
- 19: Rückwärtsfahrtrichtung
- 20: Einscherungspunkt
- 21: zweiter neuer Rückwärtsfahrttrajektorienabschnitt
- 22: zweiter neuer Rückwärtsfahrtkorridorabschnitt des Zugfahrzeugs
- 23: zweiter neuer Rückwärtsfahrtkorridorabschnitt des Anhängerfahrzeugs
- 24: erstes Kollisionsrechteck
- 25: Umkreis
- 26: Abweichungspunkt
- 27: erster Trajektorienabschnitt der korrigierten Rückwärtsfahrttrajektorie
- 28: zweiter Trajektorienabschnitt der korrigierten Rückwärtsfahrttrajektorie
- 29: Endposition
- 30: Ende der neuen Rückwärtsfahrttrajektorie
- 31: erfolgreich absolvierter Abschnitt der neuen Rückwärtsfahrttrajektorie
- 32: Korrekturfahrttrajektorie
- S1-S6, S6.1-S6.4: Verfahrensschritt

## Patentansprüche

1. Verfahren zum assistierten Rückwärtsfahren mit einem Gespann (1), das ein Zugfahrzeug (2) und ein angekuppeltes Anhängerfahrzeug (3) sowie ein Fahrerassistenzsystem aufweist, wobei
S1 zunächst mit dem Gespann (1) vorwärts gefahren wird, wobei
- eine entsprechende Vorwärtsfahrttrajektorie (4) im Fahrerassistenzsystems gespeichert wird,
- mittels einer Sensorik des Zugfahrzeugs (2) Objekte (5) detektiert werden, die seitlich neben der Vorwärtsfahrttrajektorie (4) angeordnet sind,
S2 geplant werden:
- eine Rückwärtsfahrttrajektorie (7), die möglichst wenig von der gefahrenen Vorwärtsfahrttrajektorie (4) abweicht,
- je Fahrzeug (2, 3) des Gespanns (1) ein mit der geplanten Rückwärtsfahrttrajektorie (7) korrespondierender fahrzeugindividueller Rückwärtsfahrtkorridor (8, 9),
S3 das jeweilige detektierte Objekt (5) als Kollisionsobjekt (6) klassifiziert wird, wenn das entsprechende Objekt (5) in einem oder in beiden der geplanten Rückwärtsfahrtkorridore (8, 9) liegt,
S4 wenn eines oder mehr der detektierten Objekte (5) als jeweiliges Kollisionsobjekt (6) klassifiziert wurde, eine neue Rückwärtsfahrttrajektorie (7a) und infolgedessen je Fahrzeug (2, 3) ein jeweiliger neuer fahrzeugindividueller Rückwärtsfahrtkorridor (8a, 9a) erzeugt werden, der möglichst wenig vom jeweiligen geplanten Rückwärtsfahrtkorridor (8, 9) abweicht, derart, dass die Kollisionsobjekte (6) nun in keinem der neuen fahrzeugindividuellen Rückwärtsfahrtkorridore (8a, 9a) liegen,
S5 das Gespann (1) mithilfe des Fahrerassistenzsystems rückwärts gefahren wird, wobei das Fahrerassistenzsystem in eine Querführung des Zugfahrzeugs (2) zumindest derart eingreift, dass das Gespann (1) entlang der neuen Rückwärtsfahrttrajektorie (7a) und infolgedessen durch die neuen fahrzeugindividuellen Rückwärtsfahrtkorridore (8a, 9a) hindurchgefahren wird,
S6 mittels des Fahrerassistenzsystems beim assistierten Rückwärtsfahren eine aktuelle Abweichung einer tatsächlichen Rückwärtsfahrttrajektorie (7b) des Anhängerfahrzeugs (3) von der neuen Rückwärtsfahrttrajektorie (7a) ermittelt wird, und wenn die aktuelle Abweichung größer als eine zulässige Grenzabweichung ist, mittels des Fahrerassistenzsystems das Gespann (1) zum Ausführen einer Korrekturaktion vollständig gestoppt wird, und das assistierte Rückwärtsfahren nach Ausführung der Korrekturaktion wiederaufgenommen wird.

2. Verfahren nach Anspruch 1,
**dadurch gekennzeichnet, dass**
das Fahrerassistenzsystem in Schritt S5 die Querführung des Zugfahrzeugs (2) und/oder eine Längsführung des Zugfahrzeugs (2) vollständig übernimmt.

3. Verfahren nach Anspruch 1 oder 2,
**dadurch gekennzeichnet, dass**
die Korrekturaktion die folgenden Schritte umfasst:
S6.1 mittels des Fahrerassistenzsystems: Ermitteln eines auf der neuen Rückwärtsfahrttrajektorie (7a) liegenden Abweichungspunkts (26), an dem die Abweichung der tatsächlichen Anhängerfahrzeug-Rückwärtsfahrttrajektorie (7b) die Grenzabweichung überschritten hat,
S6.2 Ausführen eines Vorwärts-Korrekturzugs, bei welchem mit dem Gespann (1) vorwärts gefahren wird,
S6.3 mittels des Fahrerassistenzsystems: Erzeugen einer korrigierten Rückwärtsfahrttrajektorie (7c), aufweisend:
- einen ersten Trajektorienabschnitt (27) zwischen einer Endposition (29) des Gespanns (1) nach dem Vorwärts-Korrekturzug und dem Abweichungspunkt (26) und
- einen zweiten Trajektorienabschnitt (28) zwischen dem Abweichungspunkt (26) und einem Ende der neuen Rückwärtsfahrttrajektorie (30),
S6.4 mithilfe des Fahrerassistenzsystems: Rückwärtsfahren mit dem Gespann (1), wobei das Fahrerassistenzsystem in eine Querführung des Zugfahrzeugs (2) zumindest derart eingreift, dass das Gespann (1) entlang der korrigierten Rückwärtsfahrttrajektorie (7c) fährt.

4. Verfahren nach Anspruch 3,
**dadurch gekennzeichnet, dass**
das Fahrerassistenzsystem in Schritt S6.4 die Querführung des Zugfahrzeugs (2) und/oder eine Längsführung des Zugfahrzeugs (2) vollständig übernimmt.

5. Verfahren nach Anspruch 3 oder 4,
**dadurch gekennzeichnet, dass**
- mittels des Fahrerassistenzsystems eine ideale Endposition (29) für den Vorwärts-Korrekturzug geplant wird,
- mittels des Fahrerassistenzsystems für den Vorwärts-Korrekturzug hin zur idealen Endposition (29) eine Korrekturfahrttrajektorie (32) geplant wird,
- der Vorwärts-Korrekturzug entlang der Korrekturfahrttrajektorie (32) ausgeführt wird,
- mittels des Fahrerassistenzsystems zwischen der idealen Endposition (29) und dem Abweichungspunkt (26) der erste Trajektorienabschnitt (27) geplant wird.

6. Verfahren nach einem der Ansprüche 3 bis 5,
**dadurch gekennzeichnet, dass**
zum Ausführen des Vorwärts-Korrekturzugs die vollständige Steuerung einer Längs- und einer Querführung des Zugfahrzeugs (2) an dessen menschlichen Fahrer übergeben wird, woraufhin dieser den Vorwärts-Korrekturzug ausführt.

7. Verfahren nach einem der Ansprüche 3 bis 5,
**dadurch gekennzeichnet, dass**
zum Ausführen des Vorwärts-Korrekturzugs das Fahrerassistenzsystem die Querführung des Zugfahrzeugs (2) und/oder eine Längsführung des Zugfahrzeugs (2) vollständig übernimmt.

8. Verfahren nach einem der vorhergehenden Ansprüche,
**dadurch gekennzeichnet, dass**
die aktuelle Abweichung der tatsächlichen Anhängerfahrzeug-Rückwärtsfahrttrajektorie (7b) von der neuen Rückwärtsfahrttrajektorie (7a) ermittelt wird, indem während der mittels des Fahrerassistenzsystems assistierten Rückwärtsfahrt an einem auf der neuen Rückwärtsfahrttrajektorie (7a) liegenden aktuellen Positionspunkt des Gespanns (1)
- ein euklidischer Abstand zwischen der tatsächlichen Anhängerfahrzeug-Rückwärtsfahrttrajektorie (7b) und dem aktuellen Positionspunkt bestimmt wird und/oder
- ein Winkel zwischen einer im aktuellen Positionspunkt von der neuen Rückwärtsfahrttrajektorie (7a) abzweigenden Tangente und einer Tangente (14) der tatsächlichen Anhängerfahrzeug-Rückwärtsfahrttrajektorie (7b) bestimmt wird.

9. Fahrerassistenzsystem, das zum Ausführen eines nach einem der vorhergehenden Ansprüche ausgebildeten Verfahrens konfiguriert ist.

10. Kraftfahrzeug mit dem nach Anspruch 9 ausgeführten Fahrerassistenzsystem, wobei das Kraftfahrzeug dazu eingerichtet ist, als Zugfahrzeug (2) für das Gespann (1) zu fungieren.
